# FASCICULE DE BREVET EUROPEEN

(11) **EP 2 972 225 B1**
(45) Date de publication et mention de la délivrance du brevet: **19.05.2021**
(21) Numéro de dépôt: 14718650.6
(22) Date de dépôt: 04.03.2014
(51) Int. Cl.: G01N 21/25, G01N 21/359, G01N 21/51, G01N 35/00, G01N 21/03, G01N 21/47

(54) **APPAREIL ET PROCÉDÉ D'ANALYSE DE PHASES DE MÉLANGES POLYPHASIQUES**
VORRICHTUNG UND VERFAHREN ZUR PHASENANALYSE VON MEHRPHASENGEMISCHEN
APPARATUS AND METHOD FOR ANALYZING PHASES OF MULTIPHASE MIXTURES

(30) Priorité: 12.03.2013 FR 1352187
(43) Date de publication de la demande: 20.01.2016
(73) Titulaire: Formulaction, 31240 L'Union (FR)
(72) Inventeur: VARANGUIEN DE VILLEPIN, Ronan, 32600 L'ISLE JOURDAIN (FR)
(74) Mandataire: BARRE LAFORGUE
(86) Numéro de dépôt international: PCT/FR2014/050483
(87) Numéro de publication internationale: WO 2014/140451

(56) Documents cités:
- EP-A1- 2 144 051
- FR-A1- 2 453 405
- FR-A1- 2 938 917
- US-B1- 6 388 751

## Description

La présente invention concerne un appareil et un procédé d'analyse de phases de mélanges polyphasiques.

Un tel appareil d'analyse est notamment destiné à détecter et mesurer des phénomènes naissants de démixtion, de sédimentation notamment dans divers mélanges. Les mélanges concernés ici sont des mélanges dans lesquels des singularités ou discontinuités (liquides, solides ou gazeuses, ou mélange) sont dispersées dans un milieu continu d'une composition et/ou d'un état différent. Il s'agit ainsi par exemple d'émulsions si deux ou plusieurs phases liquides sont mélangées ou de suspensions si des particules solides sont dispersées dans un liquide. Les domaines d'application pour de tels appareils sont nombreux. Il s'agit principalement de l'industrie chimique et para-chimique mais de tels appareils peuvent être utilisés dans tous les domaines pour lesquels il est nécessaire d'analyser la structure et/ou la stabilité d'un mélange polyphasique.

Le document EP-0 760 092 divulgue un appareil permettant de réaliser une analyse d'un échantillon d'un mélange polyphasique. Le procédé décrit dans ce document et le dispositif correspondant permettent de faire une analyse optique d'un mélange et sont idéaux pour caractériser la stabilité d'un mélange, par exemple une dispersion liquide concentrée.

Le procédé décrit dans ce document de l'art antérieur consiste à émettre un rayon lumineux à travers un échantillon de mélange polyphasique et à mesurer la lumière rétrodiffusée et éventuellement transmise sur la hauteur de l'échantillon. De la sorte, il est possible de détecter des variations de taille (coalescence, floculation) et des séparations de phases (sédimentation, crémage) du mélange analysé.

Les dispositifs fonctionnant selon ce procédé ne permettent actuellement d'analyser qu'un seul échantillon. Il existe certes des "chargeurs" qui permettent de manipuler des échantillons stockés dans une unité de stockage, de préférence thermorégulée, pour les emporter un après l'autre dans le dispositif d'analyse associé. Le principal inconvénient de cet ensemble (dispositif d'analyse et chargeur) est lié au transport des échantillons. Des perturbations sont en effet engendrées par le transport, même si celui-ci est réalisé précautionneusement, et peuvent par exemple entrainer des dispersions dans des zones où le phénomène de déstabilisation est le plus visible et ainsi masquer le phénomène intéressant. Un autre inconvénient est le prix de revient du chargeur car il doit être précis, ne pas secouer trop les échantillons qu'il transporte. Son prix de revient augmente aussi rapidement avec le nombre d'échantillons à manipuler.

On connaît aussi par les documents US-6,388,751 et FR-2 453 405 des dispositifs prévus pour l'analyse de plusieurs échantillons disposés dans des tubes. Plusieurs tubes sont disposés les uns à côté des autres en position verticale et une tête d'analyse se déplace horizontalement devant chacun des tubes pour y effectuer une mesure à une hauteur donnée. Ces dispositifs ne sont pas adaptés à une analyse de phases d'un mélange polyphasique.

Le document EP-2 144 051 prévoit un bac de rangement adapté à un dispositif d'analyse. Le bac est destiné à contenir des tubes contenant chacun un échantillon et disposés verticalement. Une tête de lecture se déplace, d'une part, sur un chariot mobile selon deux directions horizontales et, d'autre part, selon une direction verticale. La tête de lecture possède ici trois degrés de liberté. Outre le fait que ce dispositif est complexe, il est difficile d'assurer ici un positionnement précis de l'échantillon par rapport à la tête de lecture et, dans le cas d'une analyse de phases d'un mélange polyphasique, d'avoir une répétatibilité des résultats de mesures.

La présente invention a alors pour but de fournir un dispositif d'analyse des phases d'un mélange polyphasique permettant une analyse fiable de plusieurs échantillons. Avantageusement, l'appareil d'analyse fournira pour un échantillon un même résultat d'analyse quelle que soit sa place dans l'appareil. De préférence, le prix de revient de ce dispositif sera concurrentiel par rapport aux dispositifs déjà existants.

À cet effet, la présente invention propose un appareil d'analyse de phase de mélanges polyphasiques selon la revendication 1.

Il est donc proposé ici de manière originale de disposer des échantillons les uns au-dessus des autres pour les analyser. La direction longitudinale est ici donc sensiblement verticale.

Pour garantir un bon guidage de la tête de mesure, il est proposé que les moyens d'entrainement et de guidage comportent une glissière linéaire à billes. Dans cette forme de réalisation, la glissière linéaire à billes vient avantageusement prendre place au fond de l'évidement de la tête de mesure. Ce positionnement permet d'avoir une structure compacte tout en assurant un bon guidage.

Pour un bon positionnement d'une cellule de mesure par rapport à la tête de mesure, il est proposé que le dispositif d'analyse de phases comporte un rail support présentant des surfaces d'appui destinées à recevoir une face extérieure d'une cellule de mesure. Pour parfaire la précision de ce positionnement, les surfaces d'appui sont avantageusement disposées sur un dièdre.

Une forme de réalisation prévoit qu'à chaque logement est associé un support de cellule ajouré destiné à recevoir une cellule de mesure. Dans cette forme de réalisation, l'appareil d'analyse de phases peut aussi comporter des moyens élastiques venant précontraindre chaque cellule contenue dans un support en direction du fond de l'évidement de la tête de mesure. Ainsi, il est possible de garantir un positionnement quasi parfait de la cellule dans l'appareil.

Une forme de réalisation participant à réaliser un bon positionnement d'une cellule de mesure dans l'appareil de mesure de phases prévoit qu'à chaque logement est associée une trappe d'accès montée pivotante autour d'un axe parallèle à la direction longitudinale, que chaque trappe présente une face portant un support de cellule disposé de telle sorte que dans une position pivotée dite position fermée le support de cellule vient prendre place dans le logement correspondant.

La présente invention concerne en outre un procédé d'analyse de phases de mélanges polyphasiques à l'aide d'une tête de mesure selon la revendication 9.

Des variantes avantageuses de ce procédé sont définies dans les revendications 10 à 15.

Des détails et avantages de la présente invention apparaitront mieux de la description qui suit, faite en référence au dessin schématique annexé sur lequel :
La figure 1 est une vue en élévation d'un dispositif d'analyse d'échantillons selon un mode de réalisation de la présente invention,
La figure 2 est une vue de côté du dispositif de la figure 1, des éléments de protection ayant été masqués pour permettre d'apercevoir le dispositif,
La figure 3 est une vue en coupe transversale partielle d'un dispositif d'analyse d'échantillons selon la ligne de coupe III-III de la figure 2,
La figure 4 est une vue en perspective partielle illustrant l'introduction d'échantillons dans un dispositif d'analyse d'échantillons,
La figure 5 est une vue en perspective partielle montrant des moyens d'analyse d'échantillons, et
La figure 6 montre en perspective et à échelle agrandie un porte échantillon.

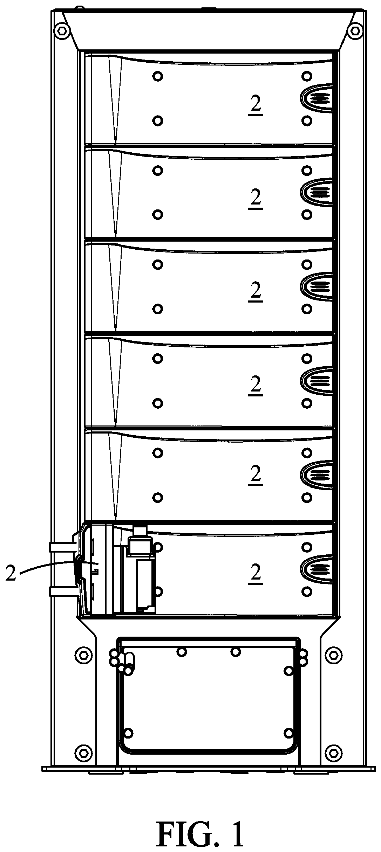

La figure 1 illustre un dispositif d'analyse prévu pour permettre l'analyse de six échantillons, notamment des échantillons de mélanges polyphasiques. Cette forme de réalisation est donnée à titre d'exemple non limitatif et, dans le cadre des revendications jointes, l'homme du métier comprendra de la description qui suit qu'un dispositif d'analyse peut être prévu pour mesurer un autre nombre d'échantillons.

La figure 1 permet d'illustrer un aspect extérieur que peut prendre un dispositif d'analyse d'échantillons. Ce dispositif comprend une structure interne supportant le dispositif d'analyse proprement dit et un capotage extérieur illustré sur la figure 1. On remarque toutefois sur cette figure 1 la présence de six trappes 2 qui seront décrites plus en détail ci-après. L'une des trappes 2 est montrée en position ouverte et en position fermée.

Comme on peut le remarquer, dans cette vue de face, les trappes 2 présentent une forme rectangulaire allongée. On choisira pour la suite de la description l'orientation suivante : les bords longitudinaux des trappes 2, correspondants aux longs côtés des rectangles, s'étendant horizontalement et les trappes sont disposées dans un plan sensiblement vertical les unes au dessus des autres.

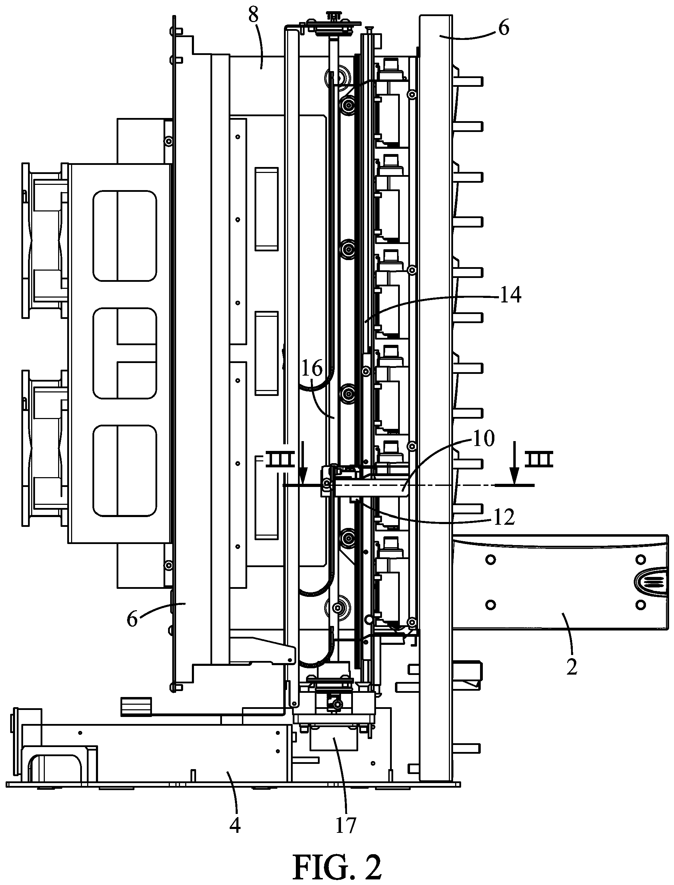

La figure 2 est une vue de côté correspondant à la vue de face de la figure 1 mais après retrait du capotage extérieur de manière à pouvoir distinguer des composants se trouvant à l'intérieur du dispositif d'analyse qui va être décrit.

On reconnaît sur cette figure un socle 4 ainsi qu'un châssis avec des montants verticaux 6 et des traverses 8. Le châssis sert de support à des moyens de guidage et d'entrainement en translation d'une tête de mesure 10. Le guidage de cette dernière est assuré par une glissière linéaire à billes qui comporte, d'une part, un chariot 12 et, d'autre part, un rail de guidage 14. L'entrainement de la tête de mesure 10 est réalisé à l'aide d'une vis trapézoïdale 16 entrainée en rotation par un moteur 17 (figure 2) monté dans le socle 4.

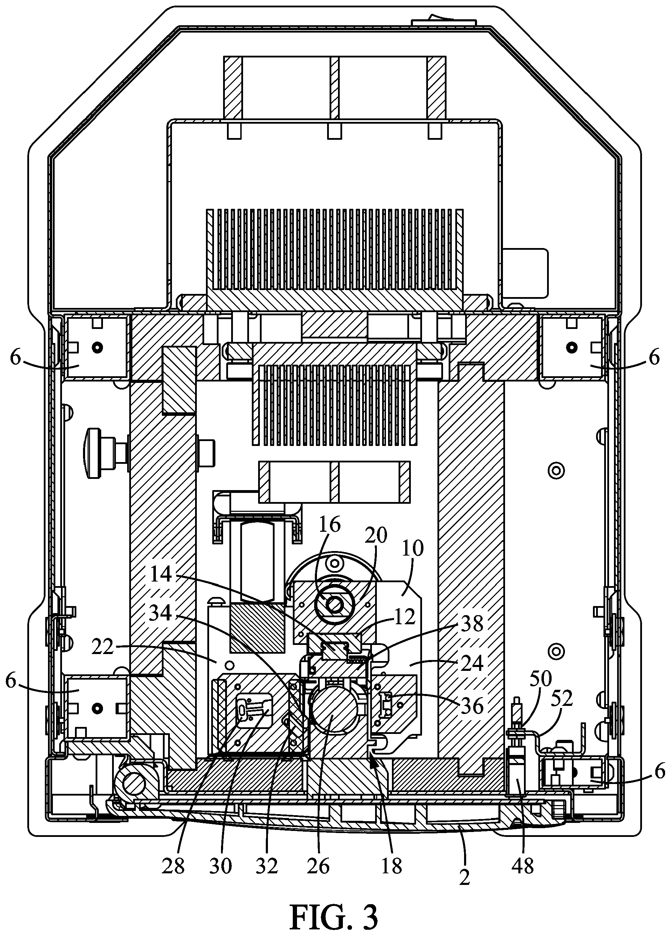

La figure 3, qui est une vue en coupe, permet de mieux comprendre la position relative de ces divers éléments. Au centre de cette figure se trouve la tête de mesure 10. Cette tête de mesure 10 correspond au support mobile (portant la référence 2 dans le brevet EP-0 760 092B1) et aux éléments qu'il porte. Cet élément est adapté dans sa forme qui est globalement rectangulaire allongée présentant un évidement 18 qui est relativement large et s'étend transversalement. Ainsi, en vue de dessus, correspondant aussi à la vue de la figure 3, la tête de mesure 10 présente une forme en U avec une base 20, une première branche 22 et une seconde branche 24. L'évidement 18 correspond à l'espace se trouvant entre les deux branches de la tête de mesure. Elle est destinée à accueillir, comme illustré sur la figure 3, une cellule de mesure 26 contenant un mélange polyphasique à analyser.

Techniquement, la tête de mesure 10 est une tête de mesure reprenant les caractéristiques d'une tête de mesure décrite dans le document EP-0 760 092 mais dont la forme a été adaptée à l'environnement décrit ici. Ainsi, la tête de mesure 10 comporte des moyens d'émission d'un rayonnement électromagnétique en direction de la cellule de mesure 26 ainsi que des moyens de détection d'un rayonnement électromagnétique rétrodiffusé par un mélange situé à l'intérieur de la cellule de mesure 26. Elle comporte en outre de manière avantageuse, et comme illustré sur la figure 3, des moyens de détection d'un rayonnement électromagnétique transmis par le mélange de la cellule de mesure 26.

Les moyens d'émission d'un rayonnement électromagnétique comprennent par exemple une diode 28 émettant dans le proche infrarouge. Dans la forme de réalisation de la figure 3, cette diode 28 est portée par la première branche 22 du dispositif de mesure. À titre illustratif non limitatif, cette diode 28 émet des rayons présentant une longueur d'onde de 880 nm (880 10⁻⁹ m). Le rayonnement émis par la diode 28 traverse tout d'abord une fente rectiligne 30 de manière à permettre une irradiation du mélange de la cellule de mesure 26 suivant un plan horizontal.

Un rayonnement électromagnétique rétrodiffusé par le mélange contenu dans la cellule de mesure peut être détecté par une photodiode 32. Dans le cas de figure de la figure 3, cette photodiode 32 est portée par la première branche 22 de la cellule de mesure et se trouve à proximité de la diode 28 d'émission. Elle reçoit le rayonnement rétrodiffusé après qu'il soit passé dans une fente 34.

Le rayonnement électromagnétique transmis à travers le mélange contenu dans la cellule de mesure peut être détecté par une photodiode 36. Dans le cas de figure de la figure 3, cette photodiode 36 est portée par la seconde branche 24 de la cellule de mesure et se trouve directement face à la diode 28 dans la direction d'émission de cette diode 28.

Il est fait référence ici à la description du brevet EP-0 760 092B1, notamment colonnes 4 et 5, pour plus de détails concernant une forme de réalisation d'une tête de mesure pouvant être utilisée dans la présente invention. Bien entendu, il s'agit d'un exemple de réalisation préféré et les valeurs numériques données ne sont pas limitatives.

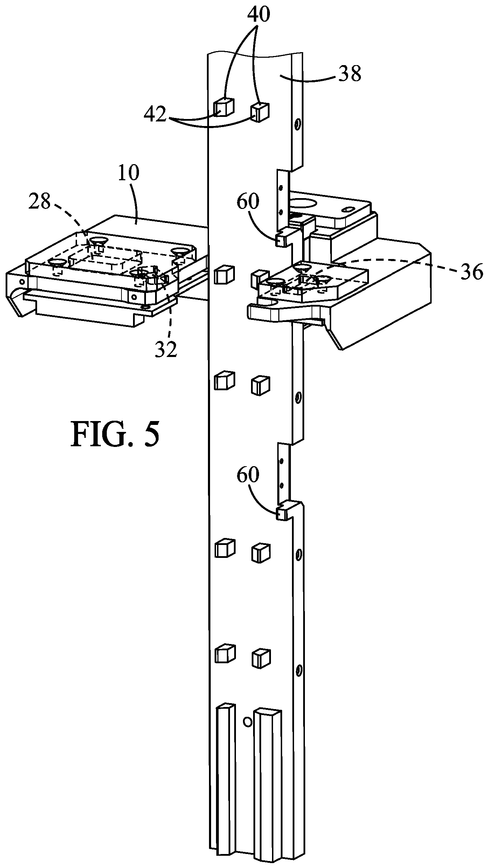

Pour réaliser une mesure, il est prévu de venir disposer une cellule de mesure 26 à l'intérieur de l'évidement 18 de la tête de mesure. Il convient de bien positionner la cellule de mesure par rapport à la diode 28 d'émission, à la photodiode 32 de détection d'un rayonnement diffusé et à la photodiode 36 de détection d'un rayonnement transmis. Les figures 2 à 5 proposent un agencement à titre d'exemple non limitatif permettant d'obtenir un bon positionnement mécanique de la cellule de mesure 26 par rapport à la tête de mesure 10. Un rail support 38 s'étend verticalement au cœur du dispositif comme une colonne vertébrale. Il présente une face, dite face avant, contre laquelle vient s'appuyer une cellule de mesure 26 pour la réalisation d'une mesure. Cette face avant est orientée vers l'ouverture de l'évidement 18 de la tête de mesure 10. Du côté opposé, c'est-à-dire face au fond de l'évidement 18, le rail support 38 porte le rail de guidage 14. Ce dernier coopère avec un chariot 12 qui vient coulisser, par l'intermédiaire de billes, sur le rail de guidage 14. Le chariot 12 porte la tête de mesure 10 et est disposé au fond de l'évidement 18 de cette tête de mesure. La vis trapézoïdale 16 traverse la base 20 de la tête de mesure 10 et permet ainsi l'entrainement en translation de la tête de mesure 10 le long du rail support 38 par l'intermédiaire d'un côté du chariot 12 et de l'autre côté du rail de guidage 14.

La description qui suit concerne des cellules de mesure 26 qui sont chacune de forme globale cylindrique circulaire tubulaire (dans la zone dans laquelle une analyse de mélange est censée être réalisée) mais d'autres formes de cellule de mesure pourraient être envisagées (par exemple cylindrique tubulaire à section carrée). Ces cellules de mesure 26 sont disposées les unes au-dessus des autres et dans le prolongement l'une de l'autre. Les axes longitudinaux correspondant à ces cellules de mesures (axe longitudinal défini par la forme cylindrique) sont tous verticaux -et donc parallèles au rail support 38.

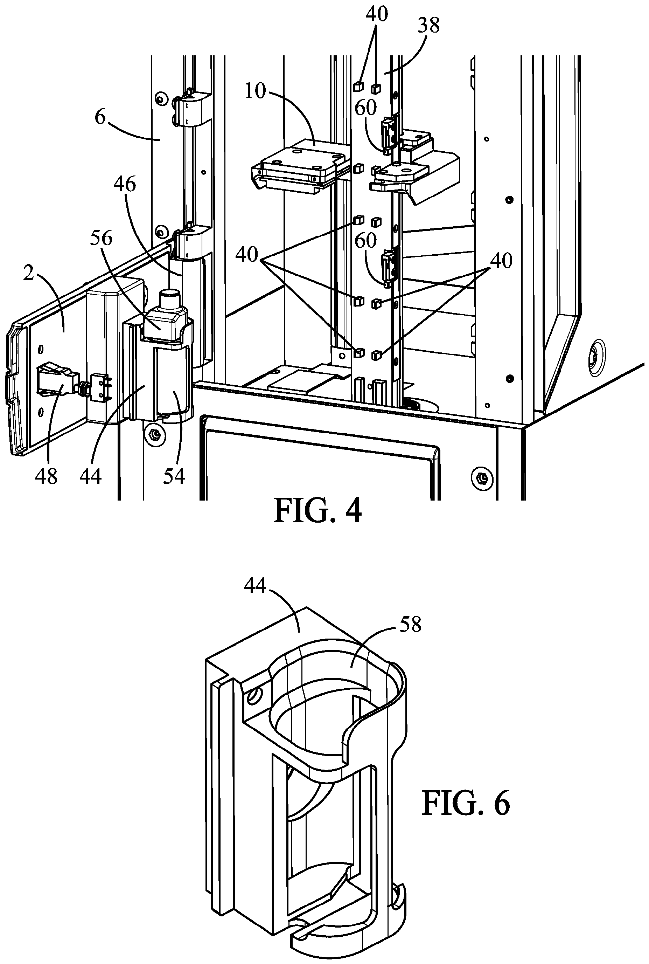

Le rail support 38 présente sur sa face avant des plots 40 d'appui qui présentent chacun une face d'appui 42. Les plots 40 sont rangés sur deux colonnes verticales, les faces d'appui 42 des plots d'une même colonne étant toutes coplanaires. Les faces d'appui 42 des plots 40 des deux colonnes définissent un dièdre dont l'ouverture est adaptée aux dimensions d'une cellule de mesure 26. On définira de préférence les faces d'appui 42 de telle sorte que lorsqu'une cellule de mesure 26 vient en appui contre deux plots de deux colonnes distinctes, les faces d'appui 42 soient tangentes à la surface extérieure de la cellule de mesure. De préférence (comme suggéré par la figure 4, il est prévu qu'une cellule de mesure 10 vienne en appui contre quatre plots 40 (deux de chaque colonne de plots) lorsqu'une analyse de phase de mélange est réalisée.

Pour venir positionner une cellule de mesure 26 contre le rail support 38, il est proposé de venir loger ladite cellule dans un porte-échantillon 44 (tel celui illustré sur la figure 6) fixé sur une face, dite face intérieure, d'une trappe 2 évoquée plus haut en référence à la figure 1 et illustrée également sur les figures 3 et 4.

Chaque trappe 2 est de forme globale rectangulaire allongée. Elle présente deux longs bords horizontaux et deux bords (courts) transversaux verticaux. Un bord transversal est monté pivotant par l'intermédiaire d'une charnière 46, directement ou indirectement, sur un montant vertical 6. L'axe de pivotement de chaque trappe 2 est un axe vertical si bien que le déplacement de la trappe 2 se fait dans un plan horizontal.

La face intérieure de chaque trappe 2 comprend un porte-échantillon 44 de telle sorte qu'une cellule de mesure 26 disposée dans le porte-échantillon 44 se trouve orientée à la verticale et puisse venir en appui contre des plots 40 du rail support 38. Comme indiqué plus haut, il est prévu qu'une cellule de mesure 26 puisse venir en appui contre quatre plots 40. Le porte échantillon 44 est quant à lui ajouré, d'une part, de manière à permettre l'appui d'une cellule de mesure 26 contre les plots 40 correspondant et, d'autre part, de manière à ne pas former d'obstacle pour un rayonnement électromagnétique émis par les moyens d'émission dans sa trajectoire jusqu'aux moyens de détection (photodiode 32 et/ou photodiode 36) lorsque la cellule de mesure 26 est en appui contre les plots 40 correspondant et que la tête de mesure 10 est positionnée par rapport à la cellule de mesure 26 pour réaliser une analyse du mélange contenu dans ladite cellule de mesure.

Chaque trappe 2 présente un système de fermeture permettant de maintenir une cellule de mesure 26 introduite dans son porte-échantillon 44 en appui contre le rail support 38. À cet effet, à proximité du bord transversal opposé à la charnière 46, un crochet 48 dit crochet "push-pull" (de l'anglais pousser-tirer) est prévu pour coopérer avec un contre-crochet 50 fixé sur la structure du dispositif. Le contre-crochet 50 est par exemple monté sur une chicane 52 montée sur un montant vertical 6. Le système de fermeture comprenant le crochet 48 et le contre-crochet 50 est de préférence muni d'un ressort afin de pouvoir assurer un bon positionnement de la cellule de mesure 26 lors d'une analyse en rattrapant notamment d'éventuels jeux dus à des tolérances de fabrication.

Comme illustré notamment sur la figure 4, une cellule de mesure 26 présente un corps 54 circulaire et un bouchon 56 de forme globalement rectangulaire (en vue de dessus). En décentrant alors le bouchon 56 par rapport au corps 54, on arrive de la sorte à réaliser un système de détrompage en réalisant dans le porte échantillon 44 un logement 58 de forme adaptée au bouchon 56.

Pour positionner une cellule de mesure 26 dans le dispositif, une trappe 2 est ouverte. La cellule de mesure 26 est introduite dans le porte échantillon 44 correspondant. Le bouchon 56 de la cellule de mesure vient se positionner dans son logement 58 réalisant ainsi un prépositionnement. La trappe 2 peut alors être fermée. La cellule de mesure 26 vient en appui contre les plots 40 correspondants. Pour assurer une bonne orientation répétable (position angulaire par rapport à l'axe de symétrie du corps 54 de la cellule de mesure 26), un pion de référence 60 est prévu sur le rail support 38 de telle sorte que le bouchon 56 de la cellule de mesure vienne reposer contre ce pion. En outre, on prévoit que lorsque le bouchon 56 est en appui contre le pion de référence 60, le corps 54 de la cellule de mesure 26 ne touche le porte-échantillon 44 que par repos sur son fond. De la sorte, le porte échantillon 44 ne peut pas intervenir sur la position de la cellule de mesure 26 dans le dispositif.

Le dispositif décrit ci-dessus permet de positionner jusqu'à six échantillons simultanément les uns au-dessus des autres. Une fois les échantillons en place (entre un et six échantillons), une analyse peut être réalisée. En déplaçant la tête de mesure 10 le long du rail support 38, la tête de mesure 10 passe successivement devant chacun des échantillons se trouvant dans le dispositif et réalise alors une série de mesures. Pour ce qui concerne les mesures réalisées sur un échantillon, il est fait à nouveau référence au brevet EP-0 760 092B1, plus particulièrement aux colonnes 6 et 7 de la description et aux revendications de procédé de ce document.

Dans le dispositif décrit ci-dessus, pour la réalisation d'analyses de six échantillons (des variantes de réalisation peuvent prévoir un dispositif permettant de loger un nombre d'échantillons différent de six, soit plus, soit moins) avec une seule tête de mesure. Chaque échantillon, disposé dans une cellule de mesure, est à chaque fois positionné avec précision et de manière reproductible par rapport à la tête de mesure.

Le dispositif décrit plus haut prévoit pour la tête de mesure une course de l'ordre de 700 mm (pour six échantillons) qui peut être adaptée en fonction des échantillons et du nombre de ceux-ci. Le guidage est assuré avec une bonne précision grâce à l'utilisation d'un rail de guidage, de préférence un rail de guidage à billes, et à sa coopération avec une vis trapézoïdale pour l'entrainement en translation de la tête de mesure.

Pour un meilleur positionnement de la cellule de mesure, il est proposé dans la description qui précède de venir appuyer "ponctuellement" la cellule de mesure sur deux dièdres. Cet appui est le plus ponctuel possible. En outre, un indexage de la position du tube (position angulaire par rapport à son axe de symétrie) est réalisé grâce à l'appui d'un bouchon de forme spécifique sur un pion de référence.

Grâce à ces caractéristiques, il est possible d'atteindre d'excellentes performances. Quel que soit l'opérateur, une cellule de mesure sera toujours positionnée de manière similaire dans le dispositif d'analyse. En outre, la manipulation de la cellule de mesure peut se faire en maintenant le flacon à la verticale sans perturber l'échantillon qu'il contient. Avec un tel dispositif, quelle que soit la position d'un échantillon dans l'appareil, qu'il se trouve à un "étage" inférieur, supérieur ou intermédiaire, le résultat de l'analyse réalisée avec la tête de mesure sera le même. La position de l'échantillon dans l'appareil n'a donc pas d'influence sur la mesure réalisée.

La structure mécanique proposée permet un excellent guidage de la tête de mesure sur toute la longueur de la course. Le système de guidage proposé ici comporte un nombre de pièces limité qui permettent le positionnement de la cellule de mesure par rapport à la tête de mesure.

La présente invention ne se limite pas aux formes de réalisations préférées décrites ci-dessus à titre d'exemples non limitatifs. Elle concerne également les variantes de réalisation à la portée de l'homme du métier dans le cadre des revendications ci-après.

## Revendications

1. Appareil d'analyse de phases de mélanges polyphasiques comportant :
- une tête de mesure (10) présentant, d'une part, un évidement (18) dans lequel est disposé une cellule de mesure (26) pour contenir un mélange à analyser, ladite cellule de mesure (26) étant placée dans un logement (44), et, d'autre part, des moyens d'émission (28) d'un rayonnement électromagnétique et des moyens de détection (32, 36) d'un rayonnement électromagnétique en provenance desdits moyens d'émission (28) et ayant pénétré le cas échéant dans la cellule de mesure (26), et
- des moyens d'entrainement (16) et de guidage (12, 14) en translation permettant le déplacement de la tête de mesure (10) sur une course nominale selon une direction dite direction longitudinale sensiblement verticale,
**caractérisé en ce que** ledit appareil comporte au moins deux logements (44) recevant chacun une cellule de mesure (26) et disposés l'un au-dessus de l'autre selon la direction longitudinale, et
**en ce que** les logements (44) et les moyens d'entrainement (16) et de guidage (12, 14) sont configurés de telle sorte que lors d'une translation de la tête de mesure (10) selon sa course nominale chaque logement prend place à l'intérieur de l'évidement (18) de la tête de mesure (10).

2. Appareil d'analyse selon la revendication 1, dans lequel les moyens d'entrainement et de guidage (12, 14) comportent une glissière linéaire à billes.

3. Appareil d'analyse selon la revendication 2, dans lequel la glissière linéaire à billes vient prendre place au fond de l'évidement (18) de la tête de mesure (10).

4. Appareil d'analyse selon l'une des revendications 1 à 3, comportant en outre un rail support (38) présentant des surfaces d'appui (42) destinées à recevoir une face extérieure d'une cellule de mesure (26).

5. Appareil d'analyse selon la revendication 4, dans lequel les surfaces d'appui (42) sont disposées sur un dièdre.

6. Appareil d'analyse selon l'une des revendications 1 à 5, dans lequel à chaque logement est associé un support (44) de cellule ajouré destiné à recevoir une cellule de mesure (26).

7. Appareil de mesure selon la revendication 6, comportant en outre des moyens élastiques (48, 50) venant précontraindre chaque cellule (26) contenue dans un support (44) en direction du fond de l'évidement (18) de la tête de mesure (10).

8. Appareil d'analyse selon l'une des revendications 6 ou 7, dans lequel à chaque logement (44) est associée une trappe (2) d'accès montée pivotante autour d'un axe parallèle à la direction longitudinale, et dans lequel chaque trappe (2) présente une face portant un support (44) de cellule disposé de telle sorte que dans une position pivotée dite position fermée le support (44) de cellule vient prendre place dans le logement correspondant.

9. Procédé d'analyse de phases de mélanges polyphasiques à l'aide d'une tête de mesure (10) présentant, d'une part, un évidement (18) dans lequel est disposé une cellule de mesure (26) contenant un mélange à analyser, ladite cellule de mesure (26) étant placée dans un logement (44), et, d'autre part, des moyens d'émission (28) d'un rayonnement électromagnétique et des moyens de détection (32, 36) d'un rayonnement électromagnétique en provenance desdits moyens d'émission (28) et ayant pénétré le cas échéant dans la cellule de mesure (26), comportant une étape d'entrainement et de guidage en translation permettant le déplacement de la tête de mesure (10) sur une course nominale, la direction de déplacement de la tête de mesure (10) étant une direction longitudinale sensiblement verticale, **caractérisé en ce que** ladite tête de mesure (10) se déplace devant au moins deux logements (44) avec chacun une cellule de mesure (26) et disposés l'un au-dessus de l'autre selon la direction longitudinale de telle sorte que lors d'une translation de la tête de mesure (10) selon sa course nominale chaque logement prend place à l'intérieur de l'évidement (18) de la tête de mesure (10).

10. Procédé d'analyse selon la revendication 9, dans lequel l'entrainement et de guidage de la tête de mesure (10) se font à l'aide d'une glissière linéaire à billes.

11. Procédé d'analyse selon la revendication 10, dans lequel la glissière linéaire à billes vient prendre place au fond de l'évidement (18) de la tête de mesure (10).

12. Procédé d'analyse selon l'une des revendications 9 à 11, dans lequel chaque cellule de mesure (26) présente une face extérieure en contact avec des surfaces d'appui (42) d'un rail support (38), les surfaces d'appui (42) étant disposées sur un dièdre.

13. Procédé d'analyse selon l'une des revendications 9 à 12, dans lequel à chaque logement est associé un support (44) de cellule ajouré destiné à recevoir une cellule de mesure (26).

14. Procédé de mesure selon la revendication 13, dans lequel chaque cellule (26) contenue dans un support (44) est précontrainte en direction du fond de l'évidement (18) de la tête de mesure (10) par des moyens élastiques (48, 50).

15. Procédé d'analyse selon l'une des revendications 13 ou 14, dans lequel à chaque logement (44) est associée une trappe (2) d'accès montée pivotante autour d'un axe parallèle à la direction longitudinale, et dans lequel chaque trappe (2) présente une face portant un support (44) de cellule disposé de telle sorte que dans une position pivotée dite position fermée le support (44) de cellule vient prendre place dans le logement correspondant.

## Patentansprüche

1. Vorrichtung zur Phasenanalyse von Mehrphasengemischen, aufweisend:
- einen Messkopf (10), der zum einen eine Vertiefung (18) aufweist, in der eine Messzelle (26) angeordnet ist, um ein zu analysierendes Gemisch zu enthalten, wobei die Messzelle (26) in einer Aufnahme (44) platziert ist, und zum anderen Sendemittel (28) einer elektromagnetischen Strahlung und Detektionsmittel (32, 36) einer elektromagnetischen Strahlung, die von den Sendemitteln (28) kommt und gegebenenfalls in die Messzelle (26) eingedrungen ist, und
- Translations-Antriebs- (16) und Führungsmittel (12, 14), die die Verlagerung des Messkopfs (10) über eine nominale Bahn gemäß einer als etwa vertikale Längsrichtung bezeichneten Richtung erlauben,
**dadurch gekennzeichnet, dass** die Vorrichtung mindestens zwei Aufnahmen (44) aufweist, von denen jede eine Messzelle (26) aufnimmt und die gemäß einer Längsrichtung übereinander angeordnet sind, und
dass die Aufnahmen (44) und die Antriebs- (16) und Führungsmittel (12, 14) derart ausgelegt sind, dass sich bei einer Translation des Messkopfs (10) gemäß seiner nominalen Bahn jede Aufnahme im Inneren der Vertiefung (18) des Messkopfs (10) platziert.

2. Analysevorrichtung nach Anspruch 1, wobei die Antriebs- und Führungsmittel (12, 14) eine lineare Gleitschiene mit Kugeln aufweisen.

3. Analysevorrichtung nach Anspruch 2, wobei sich die lineare Gleitschiene mit Kugeln auf dem Boden der Vertiefung (18) des Messkopfs (10) platziert.

4. Analysevorrichtung nach einem der Ansprüche 1 bis 3, umfassend ferner eine Stützschiene (38), die Stützoberflächen (42) aufweist, die zur Aufnahme einer Außenfläche einer Messzelle (26) bestimmt sind.

5. Analysevorrichtung nach Anspruch 4, wobei die Stützoberflächen (42) auf einem Dieder angeordnet sind.

6. Analysevorrichtung nach einem der Ansprüche 1 bis 5, wobei jeder Aufnahme eine durchbrochene Zellenabstützung (44) zugeordnet ist, die zur Aufnahme einer Messzelle (26) bestimmt ist.

7. Messvorrichtung nach Anspruch 6, aufweisend ferner elastische Mittel (48, 50), die jede Zelle (26), die in einer Stütze (44) enthalten ist, in Richtung des Bodens der Vertiefung (18) des Messkopfs (10) vorspannen.

8. Analysevorrichtung nach einem der Ansprüche 6 oder 7, wobei jeder Aufnahme (44) eine Zugangsklappe (2) zugeordnet ist, die um eine zur Längsrichtung parallele Achse schwenkbar angebracht ist, und wobei jede Klappe (2) eine Seite aufweist, die eine Zellenstütze (44) trägt, die derart angeordnet ist, dass sich in einer als geschlossene Position bezeichneten geschwenkten Position die Zellenstütze (44) in der entsprechenden Aufnahme platziert.

9. Verfahren zur Phasenanalyse von Mehrphasengemischen mit Hilfe eines Messkopfs (10), der zum einen eine Vertiefung (18) aufweist, in der eine Messzelle (26) angeordnet ist, die ein zu analysierendes Gemisch enthält, wobei die Messzelle (26) in einer Aufnahme (44) platziert ist, und zum anderen Sendemittel (28) einer elektromagnetischen Strahlung und Detektionsmittel (32, 36) einer elektromagnetischen Strahlung, die von den Sendemitteln (28) kommt und gegebenenfalls in die Messzelle (26) eingedrungen ist, aufweisend einen Translations-Antriebs- und Führungsschritt, der die Verlagerung des Messkopfs (10) über eine nominale Bahn erlaubt, wobei die Verlagerungsrichtung des Messkopfs (10) eine etwa vertikale Längsrichtung ist,
**dadurch gekennzeichnet, dass** sich der Messkopf (10) vor mindestens zwei Aufnahmen (44) mit jeweils einer Messzelle (26) verlagert und die gemäß der Längsrichtung derart übereinander angeordnet sind, dass sich bei einer Translation des Messkopfs (10) gemäß seiner nominalen Bahn jede Aufnahme im Inneren der Vertiefung (18) des Messkopfs (10) platziert.

10. Analyseverfahren nach Anspruch 9, wobei Antrieb und Führung des Messkopfs (10) mit Hilfe einer linearen Gleitschiene mit Kugeln erfolgen.

11. Analyseverfahren nach Anspruch 10, wobei sich die lineare Gleitschiene mit Kugeln auf dem Boden der Vertiefung (18) des Messkopfs (10) platziert.

12. Analyseverfahren nach einem der Ansprüche 9 bis 11, wobei jede Messzelle (26) eine Außenfläche im Kontakt mit Stützoberflächen (42) einer Stützschiene (38) aufweist, wobei die Stützoberflächen (42) auf einem Dieder angeordnet sind.

13. Analyseverfahren nach einem der Ansprüche 9 bis 12, wobei jeder Aufnahme eine durchbrochene Zellenabstützung (44) zugeordnet ist, die zur Aufnahme einer Messzelle (26) bestimmt ist.

14. Messverfahren nach Anspruch 13, wobei jede Zelle (26), die in einer Stütze (44) enthalten ist, in Richtung des Bodens der Vertiefung (18) des Messkopfs (10) durch elastische Mittel (48, 50) vorgespannt ist.

15. Analyseverfahren nach einem der Ansprüche 13 oder 14, wobei jeder Aufnahme (44) eine Zugangsklappe (2) zugeordnet ist, die um eine zur Längsrichtung parallele Achse schwenkbar angebracht ist, und wobei jede Klappe (2) eine Seite aufweist, die eine Zellenstütze (44) trägt, die derart angeordnet ist, dass sich in einer als geschlossene Position bezeichneten geschwenkten Position die Zellenstütze (44) in der entsprechenden Aufnahme platziert.

## Claims

1. Apparatus for analysing phases of multiphase mixtures, including:
- a measuring head (10) having firstly a recess (18) wherein a measuring cell (26) is disposed for containing a mixture to be analysed, said measuring cell (26) being placed in a housing (44), and secondly means (28) for emitting an electromagnetic radiation and means (32, 36) for detecting an electromagnetic radiation coming from said emission means (28) and having where applicable penetrated the measuring cell (26), and
- means for driving (16) and guiding (12, 14) in translation allowing the movement of the measuring head (10) on a nominal travel in a direction referred to as a substantially vertical longitudinal direction, **characterised in that** said apparatus includes at least two housings (44) each receiving a measuring cell (26) and disposed one above the other in the longitudinal direction, and
**in that** the housings (44) and the driving means (16) and guiding means (12, 14) are configured so that, during a translation of the measuring head (10) on the nominal travel thereof, each housing fits inside the recess (18) of the measuring head (10).

2. Analysis apparatus according to claim 1, wherein the driving means and guiding means (12, 14) include a linear runner with balls.

3. Analysis apparatus according to claim 2, wherein the linear runner with balls fits at the bottom of the recess (18) of the measuring head (10).

4. Analysis apparatus according to one of claims 1 to 3, further including a support rail (38) having bearing surfaces (42) intended to receive an external face of a measuring cell (26).

5. Analysis apparatus according to claim 4, wherein the bearing surfaces (42) are disposed on a dihedron.

6. Analysis apparatus according to one of claims 1 to 5, wherein a perforated cell support (44) intended to receive a measuring cell (26) is associated with each housing.

7. Measuring apparatus according to claim 6, further including elastic means (48, 50) prestressing each cell (26) contained in a support (44) in the direction of the bottom of the recess (18) of the measuring head (10).

8. Analysis apparatus according to one of claims 6 or 7, wherein an access hatch (2) mounted so as to pivot about an axis parallel to the longitudinal direction is associated with each housing (44) and wherein each hatch (2) has a face carrying a cell support (44) disposed so that, in a pivoted position, referred to as the closed position, the cell support (44) fits in the corresponding housing.

9. Method for analysing phases of multiphase mixtures by means of a measuring head (10) having firstly a recess (18) wherein a measuring cell (26) containing a mixture to be analysed is disposed, said measuring cell (26) being placed in a housing (44), and secondly means (28) for emitting an electromagnetic radiation and means (32, 36) for detecting an electromagnetic radiation coming from said emission means (28) and having where applicable penetrated the measuring cell (26), including a step of driving and guiding in translation allowing the movement of the measuring head (10) on a nominal travel, the direction of movement of the measuring head (10) being a substantially vertical longitudinal direction, **characterised in that** said measuring head (10) moves in front of at least two housings (44) each with a measuring cell (26) and disposed one above the other in the longitudinal direction so that, when the measuring head (10) translates on the nominal travel thereof, each housing fits inside a recess (18) of the measuring head (10).

10. Analysis method according to claim 9, wherein the driving and guiding of the measuring head (10) take place using a linear runner with balls.

11. Analysis method according to claim 10, wherein the linear runner with balls fits at the bottom of the recess (18) of the measuring head (10).

12. Analysis method according to one of claims 9 to 11, wherein each measuring cell (26) has an external face in contact with bearing surfaces (42) of a support rail (38), the bearing surfaces (42) being disposed on a dihedron.

13. Analysis method according to one of claims 9 to 12, wherein a perforated cell support (44) intended to receive a measuring cell (26) is associated with each housing.

14. Measurement method according to claim 13, wherein each cell (26) contained in a support (44) is prestressed in the direction of the bottom of the recess (18) of the measuring head (10) by elastic means (48, 50) .

15. Analysis method according to one of claims 13 or 14, wherein an access hatch (2) mounted so as to pivot about an axis parallel to the longitudinal direction is associated with each housing (44) and wherein each hatch (2) has a face carrying a cell support (44) disposed so that, in a pivoted position referred to as the closed position, the cell support (44) fits in the corresponding housing.
